## Europäisches Patentamt
## European Patent Office
## Office européen des brevets

(19)

(11) Numéro de publication : **0 046 428**
**B1**

(12)

# FASCICULE DE BREVET EUROPÉEN

(45) Date de publication du fascicule du brevet :
**13.07.83**

(51) Int. Cl.³ : **B 23 K   9/02**

(21) Numéro de dépôt : **81401269.6**

(22) Date de dépôt : **06.08.81**

(54) **Procédé de soudage.**

(30) Priorité : **19.08.80 FR 8018124**

(43) Date de publication de la demande :
**24.02.82 Bulletin 82/08**

(45) Mention de la délivrance du brevet :
**13.07.83 Bulletin 83/28**

(84) Etats contractants désignés :
**BE CH DE FR GB IT LI SE**

(56) Documents cités :
**DE A 2 624 012**
**FR A 1 579 711**
**FR A 2 016 732**

(73) Titulaire : **Framatome**
**Tour Fiat 1 place de la Coupole**
**F-92400 Courbevoie (FR)**

(72) Inventeur : **Batistoni, Michel**
**F-71640 Dracy-le-Fort (FR)**
Inventeur : **Georges, Alain ·**
**rue des Vendanges Pragny-sur-Saône**
**F-71350 Verdun-sur-le-Doubs (FR)**

(74) Mandataire : **Le Brusque, Maurice et al**
**CREUSOT-LOIRE 15 rue Pasquier**
**F-75383 Paris Cedex 08 (FR)**

Jouve, 18, rue St-Denis, 75001 Paris, France

## Procédé de soudage

L'invention a pour objet un procédé de réalisation d'un grand nombre de cordons de soudure en forme de contours indépendants écartés les uns des autres et s'applique notamment au soudage en continu d'une série de tubes sur une plaque tubulaire.

Pour le soudage de tubes sur une plaque tubulaire, en particulier pour la réalisation d'échangeurs de chaleur constitués d'un grand nombre de tubes dont les extrémités s'engagent dans des orifices percés dans une plaque tubulaire, on utilise généralement une tête de soudage automatique comportant une torche et des moyens de déplacement de la torche suivant plusieurs directions pour lui permettre de suivre l'un après l'autre chaque contour à souder.

Il existe différents systèmes de soudure, mais, le plus souvent, la phase automatique du procédé est limitée au soudage d'un contour isolé. Un opérateur doit donc déposer la tête de soudage sur le tube à souder et placer la torche sur le point de départ du premier cordon, puis amorcer l'arc, la soudure étant ensuite réalisée par déplacement automatique de la torche le long du contour à souder. A la fin de la soudure, il est habituel de dépasser le point de départ pour effectuer un recouvrement. L'opérateur arrête alors la torche et coupe l'arc puis met en place la tête de soudage sur le tube suivant. Ainsi l'opérateur doit intervenir à la fin de la soudure de chaque cordon pour placer la tête de soudage sur le tube suivant et positionner la torche au point de départ du nouveau cordon à souder. Cette opération est minutieuse et longue. D'autre part lors de l'exécution de chaque cordon l'arc doit être amorcé puis coupé en fin de cordon. Ces phases transitoires sont difficiles à contrôler et peuvent entraîner des défauts locaux, protubérances dues au flash d'amorçage ou micro-cratères lors de l'extinction de l'arc.

On connaît également un procédé de soudage en continu (FR-A-15 79 711) qui consiste à placer sur tous les tubes des bouchons permettant d'effectuer simplement des passes de soudure sur l'ensemble de la plaque, les tubes étant ensuite réalisés. Ce procédé augmente considérablement la longueur des cordons de soudure et nécessite ensuite un usinage.

L'invention a pour objet un nouveau procédé de soudure permettant de remédier à ces inconvénients en réalisant la soudure en continu et d'une façon automatique.

Selon l'invention (voir la revendication 1, qui a été délimitée par rapport au document FR-A-2 016 732), après avoir effectué de façon connue l'amorçage de l'arc et la mise en position de la torche sur le premier contour à souder puis réalisé le premier cordon de soudure, on diminue l'intensité de la torche pour effectuer un évanouissement partiel de l'arc de façon telle que celui-ci reste amorcé sans fusion de la pièce puis on commande un déplacement de la torche jusqu'à une position de départ sur un deuxième contour à souder, on effectue en ce point une préfusion statique en commandant le retour à l'intensité de soudage, on réalise le deuxième cordon de soudure en suivant le deuxième contour à souder, on diminue alors l'intensité de la torche pour réaliser un nouvel évanouissement partiel de l'arc, on commande un nouveau déplacement de la torche jusqu'à un point de départ sur un troisième contour à souder, on effectue en ce point une préfusion statique en revenant à l'intensité de soudage puis on réalise le troisième cordon et ainsi de suite, le transfert d'un contour à l'autre et le réglage des paramètres de soudure étant effectués automatiquement jusqu'à réalisation du dernier cordon, l'arc étant alors coupé.

Dans un mode de réalisation particulier, les cordons à souder ayant la forme de contours fermés, après avoir mis en place la torche sur le point de départ d'un cordon et effectué une préfusion statique, on réalise le cordon en suivant le contour et, après avoir dépassé le point de départ pour réaliser un recouvrement, on diminue l'intensité de l'arc puis, l'arc étant partiellement évanoui, on continue alors à suivre une partie du contour au-dessus du cordon déjà réalisé jusqu'à un point d'où l'on commande le déplacement de la torche vers le cordon suivant.

Pour la soudure sur une plaque tubulaire d'une pluralité de tubes dont les extrémités sont alignées suivant plusieurs rangées parallèles, on place la torche sur le côté et sur l'axe de la première rangée, on amorce l'arc et on déplace la torche le long de l'axe jusqu'à un point A1 placé sur le contour du premier tube à souder et, après avoir effectué une préfusion statique en ce point A1, on réalise le cordon en suivant tout le contour et en dépassant le point A1 jusqu'à un point B1 où l'on diminue l'intensité pour évanouir partiellement l'arc, on déplace alors la torche dont l'arc est partiellement évanoui en suivant le contour jusqu'à un point C1 diamétralement opposé à A1, puis le long de l'axe de la rangée jusqu'à un point A2 placé sur le contour du second tube de la rangée, on effectue de la même façon la soudure du second tube jusqu'à un point B2, on déplace la torche, arc partiellement évanoui, jusqu'à un point C2 sur l'axe de la rangée puis, le long de l'axe, jusqu'au troisième tube et ainsi de suite jusqu'au dernier tube (n) de la première rangée et l'on déplace la torche, arc partiellement évanoui, le long du cordon effectué jusqu'à un point $C_n$ d'où l'on commande le déplacement de la torche sur l'axe de la seconde rangée puis le long de cet axe, jusqu'à un point A'1 placé sur le tube extrême de ladite seconde rangée et l'on effectue de la même façon la soudure des tubes de la seconde rangée et ainsi de suite pour les rangées suivantes.

De façon préférentielle, les déplacements automatiques de la torche et le réglage des paramètres de la soudure seront effectués au moyen d'une installation à commande numérique ou microprocesseurs.

L'invention va maintenant être décrite avec plus de détails en se référant aux dessins annexés qui concernent, à titre d'exemple, le soudage d'une série de tubes sur une plaque tubulaire.

La figure 1 représente schématiquement l'ensemble de l'installation utilisée pour la mise en œuvre du procédé.

La figure 2 représente schématiquement, en vue de dessus, le trajet de la torche pour la soudure d'une série de tubes.

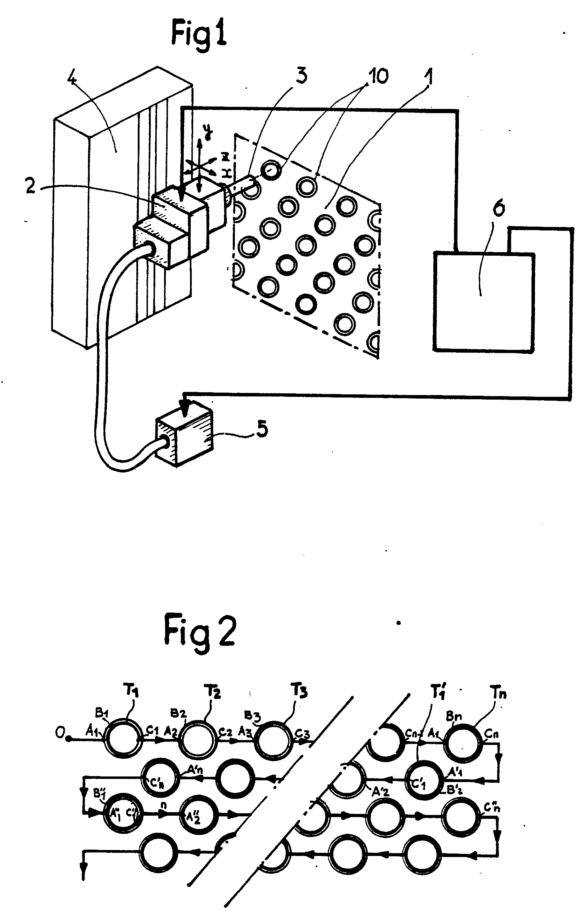

Sur la figure 1, on a représenté schématiquement une partie d'une plaque tubulaire 1 sur laquelle doivent être soudées les extrémités de tubes 10, au moyen d'une tête de soudage 2 munie d'une torche 3.

La tête de soudage 2 peut se déplacer de façon connue sur un support 4 suivant au moins trois directions x, y, z.

D'autre part, la tête de soudage 2 est reliée à un poste de soudure 5 qui alimente la torche en courant de soudage, gaz de protection, et fluide réfrigérant. Ce poste de soudure 5 assure d'autre part les fonctions d'amorçage et de coupure d'arc et, d'une façon générale, peut régler les paramètres de soudage et notamment l'intensité de l'arc.

De préférence, le poste de soudage sera du type T.I.G. utilisé pour la soudure des plaques tubulaires car la zone de fusion est très localisée et très stable.

La machine de positionnement 4 de la tête de soudure 2 est contrôlée par commande numérique par un appareillage 6 qui commande le déplacement de la torche suivant au moins deux axes asservis en contournage pour la réalisation d'une trajectoire plane. Un troisième axe peut être ajouté pour le contrôle en continu de l'intensité du courant de soudage.

D'autre part, l'appareillage 6 permet également de piloter par programme numérique le poste de soudage 5.

Le soudage des différents tubes se déroule, selon l'invention, de la façon représentée schématiquement sur la figure 2. La torche 3 est placée par un opérateur en un point 0 sur le côté de la plaque tubulaire, à proximité du premier tube T1 de la première rangée et sur l'axe de celle-ci.

La tête de soudage se déplace alors jusqu'à ce que la torche soit au-dessus d'un point A1 sur le contour à souder du tube T1. L'arc est alors amorcé en A1 à moins qu'il ne l'ait déjà été en 0, et, au point A1, on effectue une préfusion statique temporisée à l'intensité de soudage.

On passe alors à la phase de soudage numérique en suivant tout le contour à souder du tube T1, on revient au point A1 et, de façon connue, on effectue un recouvrement en dépassant le point A1 jusqu'en B1. En ce point le poste de soudure 5, piloté par la commande numérique 6, commande un évanouissement partiel de l'arc. Il est ainsi possible, sans détériorer le cordon déjà réalisé de passer au-dessus de celui-ci en commandant le déplacement de la torche jusqu'au point C1 diamétralement opposé au point A1.

L'arc étant toujours évanoui la torche se déplace alors le long de l'axe de la rangée de tubes, jusqu'au point A2 placé sur le tube suivant T2. Ce déplacement peut laisser une trace sur la plaque tubulaire mais ceci n'a pas d'inconvénients, l'arc étant partiellement évanoui.

En ce point A2, le poste de soudure 5 piloté par l'appareillage fixe commande de nouveau une préfusion statique à l'intensité de soudage et la torche se déplace alors suivant le contour du tube T2 de façon à réaliser le second cordon de soudure jusqu'à un point B2 situé légèrement au-delà de A2. De la même façon que précédemment, l'intensité de soudure est réduite en ce point pour effectuer un évanouissement partiel de l'arc et la torche se déplace au-dessus du cordon réalisé jusqu'en C2, puis, de ce point, le long de l'axe de la rangée, jusqu'en A3 sur le tube T3. On effectue ainsi l'un après l'autre la soudure des tubes de la première rangée jusqu'au dernier tube Tn.

L'arc ayant été évanoui, comme précédemment, en Bn, on suit le cordon déjà réalisé jusqu'à un point Cn d'où l'on se déplace pour passer sur l'axe de la deuxième rangée, l'arc étant évanoui. On suit alors cet axe pour arriver en A'1 sur le premier tube T'1 de la seconde rangée. On effectue en ce point une préfusion statique temporisée puis on réalise le cordon de soudure jusqu'en B'1. On évanouit alors l'arc, on passe ainsi jusqu'en C'1 puis en A'2 sur le tube suivant. On continue ainsi à réaliser l'un après l'autre tous les tubes de la seconde rangée et on passe alors, de la même façon que précédemment sur la troisième rangée.

Toutes les rangées ayant été effectuées successivement de cette façon, on réalise, après la soudure du dernier tube de la dernière rangée, un évanouissement total et une coupure de l'arc.

On constate que, en utilisant un appareillage classique de soudure automatique, on a pu, grâce au procédé selon l'invention, réaliser automatiquement et en continu la soudure de tous les tubes, l'opérateur n'ayant à intervenir qu'au début et à la fin du travail.

Les paramètres de soudage étant entièrement pilotés par la commande numérique il est possible de travailler avec un poste de soudage T.I.G. standard.

De plus, ce pilotage numérique des paramètres de soudage et de la trajectoire permet de les moduler pour optimiser les caractéristiques du cordon.

Les mouvements étant assurés par les chaînes cinématiques classiques de la machine outil, on évite les inconvénients des têtes miniaturisées, en particulier jeu mécanique et manque de rigidité. En outre, la douceur des motorisations et le cycle de soudage sans rupture totale d'arc permettent de réaliser des cordons très réguliers.

Normalement, ce procédé de soudage ne s'applique que dans les cas où la torche est perpendiculaire au plan de soudage. Cependant, il serait possible, dans le cas de soudage avec électrodes inclinées par rapport au plan de soudage ou avec fil d'apport, d'adjoindre entre la machine et la torche une tête motorisée qui assurerait les mouvements complémentaires.

D'une façon générale d'ailleurs, l'invention ne se limite pas aux détails du mode de réalisation qui vient d'être décrit.

En particulier, pour améliorer la cadence de travail il serait possible d'utiliser plusieurs torches de soudage mises en mouvement par la même cinématique puisque, dans le cas du soudage d'une plaque tubulaire, les soudures à réaliser sont répétitives et identiques. De même, dans le cas de pièces présentant des irrégularités géométriques au niveau de l'assemblage à souder, on pourrait adjoindre à l'installation un dispositif connu de palpage ou de correction de la trajectoire de la torche. Un tel dispositif permettrait de réaliser des soudures le long de contours indépendants qui ne seraient pas parfaitement identiques. D'ailleurs, si l'invention est particulièrement adaptée au soudage des plaques tubulaires, on peut aussi l'utiliser dans d'autres applications chaque fois qu'il y a lieu de réaliser un grand nombre de cordons de soudure sur des contours indépendants les uns des autres, ces contours pouvant ne pas être fermés. En effet, le cycle de soudage qui a été décrit est le mieux adapté à la soudure de plusieurs rangées de contours circulaires mais d'autres séquences pourraient être utilisées en modifiant le trajet qui permet à la torche de passer successivement au-dessus de tous les contours à souder. De même, en restant dans le cadre de l'invention on pourrait modifier la position des points caractéristiques, points d'amorçage initial, points de préfusion statique, points de fin de recouvrement et de début d'évanouissement, points de début et de fin de transfert.

## Revendications

1. Procédé de réalisation d'un grand nombre de cordons de soudure en forme de contours indépendants (10) écartés les uns des autres, au moyen d'une tête de soudage automatique (2) comportant une torche (3) et des moyens (4, 6) de déplacement automatique de la torche (3) suivant plusieurs directions permettant à cette dernière, après avoir suivi un contour, d'être transférée automatiquement jusqu'à un point de départ sur un second contour et ainsi de suite, caractérisé par le fait qu'après avoir effectué de façon connue l'amorçage de l'arc et la mise en position de la torche (3) sur le premier contour (10) à souder puis réalisé le premier cordon de soudure, on diminue l'intensité de la torche (3) pour effectuer un évanouissement partiel de l'arc, puis l'on commande un déplacement de la torche (3) jusqu'à une position de départ sur un deuxième contour à souder, on effectue en ce point une préfusion statique temporisée en commandant le retour à l'intensité de soudage, on réalise le deuxième cordon de soudure en suivant le deuxième contour à souder, on diminue alors l'intensité de la torche pour réaliser un nouvel évanouissement partiel de l'arc, on commande un nouveau déplacement de la torche jusqu'à un point de départ sur un troisième contour à souder, puis on réalise le troisième contour et ainsi de suite, le transfert d'un contour à l'autre et le réglage des paramètres de soudure étant effectué automatiquement jusqu'à réalisation du dernier cordon, l'arc étant alors coupé.

2. Procédé selon la revendication 1, caractérisé par le fait que, les cordons à souder ayant la forme de contours fermés (T1, T2 ... Tn), après avoir mis en place la torche sur le point de départ $A_1$ d'un cordon et effectué une préfusion statique temporisée, on réalise le cordon en suivant le contour $T_1$ et, à la fin du cordon et après avoir dépassé le point de départ $A_1$ pour réaliser un recouvrement, on diminue l'intensité de l'arc puis l'arc étant partiellement évanoui on continue alors à suivre une partie du contour $T_1$ au-dessus du cordon déjà réalisé, jusqu'à un point $C_1$ d'où l'on commande le déplacement de la torche vers le cordon suivant $T_2$.

3. Procédé selon l'une des revendications 1 et 2, de soudure sur une plaque tubulaire d'une pluralité de tube dont les extrémités sont alignées en plusieurs rangées parallèles, caractérisé par le fait que l'on place la torche sur le côté et sur l'axe de la première rangée, que l'on amorce l'arc et que l'on déplace la torche le long de l'axe jusqu'à un point $A_1$ placé sur le contour $T_1$ du premier tube à souder, qu'après avoir effectué une préfusion statique temporisée en ce point $A_1$, on réalise le cordon en suivant tout le contour et en dépassant le point $A_1$, jusqu'à un point $B_1$ où l'on diminue l'intensité pour évanouir l'arc, qu'on déplace alors la torche dont l'arc est évanoui en suivant le contour $T_1$ jusqu'à un point $C_1$ diamétralement opposé à $A_1$ puis le long de l'axe de la rangée jusqu'à un point $A_2$ placé sur le contour du second tube de la rangée, qu'on effectue de la même façon la soudure jusqu'à un point $B_2$, qu'on déplace la torche, l'arc étant évanoui jusqu'à un point $C_3$ sur l'axe de la rangée et ainsi de suite jusqu'au dernier tube Tn de la première rangée où l'on déplace la torche arc évanoui, le long du cordon effectué jusqu'à un point Cn d'où l'on commande le déplacement de la torche sur l'axe de la seconde rangée, puis le long de cet axe jusqu'à un point $A'_1$ placé sur le tube extérieur de la seconde rangée et que l'on effectue de la même façon la soudure des tubes de la seconde rangée et ainsi de suite pour les rangées suivantes.

4. Procédé de soudage selon l'une des revendications précédentes caractérisé par le fait que les déplacements automatiques de la torche et le réglage des paramètres de soudure sont commandés numériquement.

## Claims

1. Process for producing a large number of weld beads in the form of independent contours (10) spaced apart from one another, by means of an automatic welding head (2) incorporating a torch (3) and means (4, 6) for the automatic displacement of the torch (3) in several directions, making it possible for the latter, after following a contour, to be transferred automatically to a starting point on a second contour, and so on, characterised in that, after the striking of the arc and the positionning of the torch (3) on the first contour (10) to be welded have been carried out in a known way and after the first weld bead has then been produced, the intensity of the torch (3) is reduced so as to effect partial fading of the arc, displacement of the torch (3) is then controlled up to a starting position on a second contour to be welded, at this point delayed static preliminary melting is carried out by controlling a return to the welding intensity, the second weld bead is produced by following the second contour to be welded, the intensity of the torch is then reduced so as to effect renewed partial fading of the arc, a new displacement of the torch is controlled up a starting point on a third contour to be welded, the third contour is produced, and so on, the transfer from one contour to another and the adjustment of the welding parameters being made automatically until the last bead is produced, the arc then being cut off.

2. Process according to Claim 1, characterised in that, the beads to be welded having the form of closed contours (T1, T2, ... Tn), after the torch has been positioned on the starting point $A_1$ of a bead and after delayed static preliminary melting has been carried out, the bead is produced by following the contour $T_1$ and, at the end of the bead and after going beyond the starting point $A_1$ to make an overlap, the intensity of the arc is reduced, and then, with the arc partially faded, a portion of the contour $T_1$ continues to be followed above the bead already produced, up to a point $C_1$ from which the displacement of the torch towards the following bead $T_2$ is controlled.

3. Process according to one of Claims 1 and 2 for welding on a tubular plate a plurality of tubes, the ends of which are aligned in several parallel rows, characterised in that the torch is placed on the side and on the axis of the first row, in that the arc is struck and in that the torch is displaced along the axis up to a point $A_1$ located on the contour $T_1$ of the first tube to be welded, in that, after delayed static preliminary melting has been carried out at this point $A_1$, the bead is produced by following the entire contour and by going beyond the point $A_1$ up to a point $B_1$ where the intensity is reduced so as to extinguish the arc, in that the torch, the arc of which is faded, is then displaced by following the contour $T_1$ up to a point $C_1$ diametrically opposite $A_1$ and then along the axis of the row up to a point $A_2$ located on the contour of the second tube in the row, in that welding is carried out in the same way up to a point $B_2$, in that the torch is displaced, with the arc being faded up to a point $C_3$ on the axis of the row, and so on up to the last tube Tn in the first row, where the torch, with the arc faded, is displaced along the bead produced, up to a point Cn from which the displacement of the torch is controlled to the axis of the second row and then along this axis up to a point A'1 located on the outer tube in the second row, and in that the welding of the tubes in the second row is carried out in the same way, and so on for the following rows.

4. Welding process according to one of the preceding claims, characterised in that the automatic displacements of the torch and the adjustment of the welding parameters are controlled numerically.

**Ansprüche**

1. Verfahren zur Herstellung einer großen Anzahl Schweißnähte in Form von einzelnen, voneinander im Abstand befindlichen Konturen (10) mittels einem automatischen Schweißkopf (2) mit einem Brenner (3) und Mittel (4, 6) zum automatischen Verschieben des Brenners (3) in mehrere Richtungen, wodurch dieser, nach dem Nachfahren einer Kontur, automatisch bis zu einem Ausgangspunkt an einer zweiten Kontur und so weiter versetzt werden kann, dadurch gekennzeichnet, daß nachdem der Lichtbogen in bekannter Weise gezündet und der Brenner (3) an der ersten zu schweißenden Kontur (10) in Stellung gefahren, dann die erste Schweißnaht ausgeführt wurde, die Stromstärke des Brenners (3) verringert wird um ein teilweises Schwinden des Lichtbogens zu erzielen, alsdann der Brenner (3) bis zu einer Ausgangsstellung an einer zweiten zu schweißenden Kontur verschoben wird, an dieser Stelle durch die Wiederherstellung der Schweißstromstärke eine verzögerte statische Vorschmelzung durchgeführt wird, die zweite Schweißnaht durch Nachfahren der zweiten zu schweißenden Kontur ausgeführt wird, dann die Stromstärke des Brenners verringert wird um erneut ein teilweises Schwinden des Lichtbogens zu erzielen, der Brenner bis zu einem neuen Ausgangspunkt an einer dritten zu schweißenden Kontur versetzt wird, dann diese dritte Kontur und so weiter hergestellt wird, wobei das Versetzen von einer Kontur zur anderen sowie die Einstellung der Schweißparameter bis zur Herstellung der letzten Schweißnaht automatisch erfolgt, und schließlich der Lichtbogen gelöscht wird.

2. Verfahren nach Anspruch 1, wobei die auszuführenden Schweissnähte als geschlossene Konturen ($T_1$, $T_2$ ... Tn) ausgebildet sind, dadurch gekennzeichnet dass, nachdem de Brenner an den Ausgangspunkt $A_1$ einer Schweißnaht in Stellung gebracht und eine verzögerte statische Vorschmelzung durchgeführt wurde, die Schweißnaht durch Nachfahren der Kontur $T_1$ ausgeführt wird, am Ende der Schweißnaht nach der Herstellung einer Überlappung des Ausgangspunktes $A_1$ die Stromstärke des Lichtbogens verringert wird, dann bei einem teilweisen Schwinden des Lichtbogens, einen Teil der Kontur $T_1$ über der bereits hergestellten Schweißraupe bis zu einem Punkt $C_1$ weiter nachgefahren wird, wo der Brenner zu der nächsten Schweißnaht $T_2$ versetzt wird.

3. Verfahren nach einem der Ansprüche 1 und 2, zum Verschweißen einer Mehrzahl Rohre auf einer Rohrplatte, deren Enden in mehreren parallel fluchtenden Reihen angeordnet sind, dadurch gekennzeichnet, daß der Brenner seitlich und auf der Mittellinie der ersten Reihe in Stellung gebracht wird, daß der Lichtbogen gezündet und der Brenner entlang der Mittellinie bis zu einem auf der Kontur $T_1$ des ersten zu schweißenden Rohres gelegenen Punkt $A_1$ verfahren wird, daß nach der Herstellung an diesem Punkt $A_1$ einer verzögerten statischen Vorschmelzung die Schweißnaht durch Nachfahren der gesamten Kontur und Überschreiten des Punktes $A_1$ bis zu einem Punkt $B_1$ hergestellt wird, wo die Stromstärke zum Schwinden des Lichtbogens verringert wird, daß der Brenner nach dem Schwinden des Lichtbogens durch Nachfahren der Kontur $T_1$ bis zu einem dem Punkt $A_1$ vollkommen entgegengesetzten Punkt $C_1$, dann entlang der Reihenmittellinie bis zu einem an der Kontur des zweiten Rohres der Reihe gelegenen Punktes $A_2$ verfahren wird, daß die Schweißnaht bis zu einem Punkt $B_2$ auf dieselbe Art und Weise ausgeführt wird, daß der Brenner nach dem Schwinden des Lichtbogens bis zu einem Punkt $C_3$ auf der Reihenmittellinie und so weiter bis zum letzten Rohr Tn der ersten Reihe verfahren wird, wo der Brenner nach dem Schwinden des Lichtbogens entlang der bis zu einem Punkt Cn ausgeführten Schweißnaht verfahren wird, von da der Brenner auf die Mittellinie der zweiten Reihe versetzt, dann entlang dieser Mittellinie bis zu einem auf dem Außenrohr der zweiten Reihe befindlichen Punkt $A'_1$ verfahren wird, und daß die Rohre der zweiten Reihe und diejenigen der folgenden Reihen auf dieselbe Art und Weise verschweißt werden.

4. Schweißverfahren nach einem der vorhergehenden Ansprüche, dadurch gekennzeichnet, daß das automatische Verschieben des Brenners und die Einstellung der Schweißparameter über eine Digitalsteuerung erfolgen.

# Fig 1

# Fig 2